# EUROPEAN PATENT APPLICATION

(11) **EP 1 306 788 A1**
(43) Date of publication of application: **02.05.2003**
(21) Application number: 02257367.9
(22) Date of filing: 23.10.2002
(51) Int. Cl.: G06F 17/60

(54) **System and method of competitive auction**

(30) Priority: 23.10.2001 US 983198
(71) Applicant: Prime Table Games LLC, Las Vegas, NV 89128 (US)
(72) Inventor: Webb, Derek J., Littleover, Derby DE23 6FX (GB)
(74) Representative: Skinner, Michael Paul

(57) **Abstract**

A competitive auction incorporates a quiz format to determine allocation of auctioned items. Participants each pay a participation fee each time an auction is entered for each item. The participants then each guess an average price estimate for the item among the participants. The closest estimate wins the auction for that item. Tied winning estimates are processed in subsequent rounds in various ways. In one operating mode, the participation fees are required to cover the cost of the auctioned item sufficiently enough to provide a profit to the auction venue or sponsor. This methodology provides much broader access to high cost items while adding a competitive game element to the auction process.

## Description

The present invention relates to auction system and associated methodology and, more particularly, to a system and method for conducting a competitive auction. The system to be described, allows aspects of auction and quiz game to be combined to enable products to be offered to a broader marketplace than previously available.

Traditional auctions remain popular for items such as livestock, cars, property, furniture, works of art and the like. These items are almost always previously owned items, and it is unusual to see new items of such nature in auction. Many people are deterred from participating for fear of not understanding the auction process.

Internet auction sites have recently grown in popularity. The requirement to visit a live auction site in order to participate is circumvented by the technology. This of course applies to video links at traditional auctions. Internet auction sites have some advantages over traditional auction sites. Firstly, the potential marketplace is larger. Secondly, there is less intimidation for the first time participant. Thirdly, the economies of internet usage allow a broader range of products at lower price points to be viably auctioned.

There is also a wider range of quiz games available today than ever. Trivial Pursuit is still popular as are newer games like Cranium. Prime time trivia television programs have broadened the appeal of quiz games, and quiz nights and the like are popular in gathering establishments. Many people are also willing to play quiz games in an internet format. This may be a quiz dedicated to a specific area of knowledge, for example, a specific genre of pop music.

Another popular television format is the antique program. In one program, participants estimate the price or value of the selected antiques.

Currently, no-one has proposed a system of conducting an auction, which allows benefit of these various arrangements to be combined, and in particular, to create a system which operates to conduct an auction which incorporates elements of a competitive quiz game auction method, creating a system which allows participants to "win" auction items in a game format.

Systems and methods in accordance with the present invention are set out in the accompanying claims, to which reference should now be made.

As will be understood from the description set out below, the invention provides a method which enables wide participation in an auction style purchase of new and used items using a quiz-type format to determine allocation of the auctioned items. Preferably, the invention requires each participant to pay a fee each time an auction is entered for each item. Each participant estimates the average price offered by all participants, and the closest estimate wins the auction for that item. Preferably, participants bidding for a next item do so by paying the requisite participation fee.

In the event of a tied estimate, then the tied participants are invited to submit a new estimate. In this context, there could be complete freedom of choice with respect to the second estimate or there could be restrictions. Second round ties could be resolved similarly in a third round, or alternatively, second round ties could incorporate fractional pricing (e.g., using dollar values less than $1 or possibly less than 1¢). Fractional pricing could also be permitted in all rounds, or only the second round onward.

Examples of the present invention will now be described in more detail by way of example only, and with reference to the accompanying drawings, in which:
FIGURE 1 is a schematic block diagram of an auction system according to the present invention.
FIGURE 2 is a flow diagram illustrating the method according to the present invention; and
FIGURE 3 is a flow diagram illustrating procedures for processing ties.

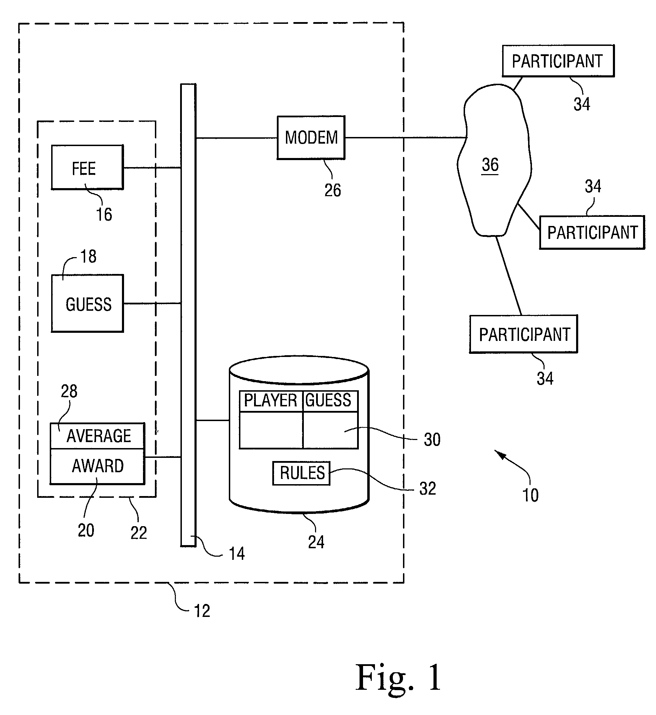

Fig. 1 schematically shows an auction system 10. Principal components of the system 10 are embodied within an appropriately programmed general purpose computer 12. Within the computer 12, a databus 14 provides communication between various modules 16, 18, 20. These modules may conveniently be software modules executed on a processor 22. However, various arrangements of hardware and software could be devised for implementing the modules, in accordance with known principals.

The bus 14 also provides communication between the modules 16, 18, 20 and memory 24. Finally, the bus 14 provides a connection to a modem 26 for communication externally of the computer 12.

The purpose and operation of the various modules will be explained more clearly below, when the system is described in use. Module 16 is a fee module which, in use, receives a participation fee from each of the plurality of participants in the auction. Module 18 is a guess module which receives an average price estimate guess for the item among the participants, from each participant. Module 20 is an award means for awarding the item being auctioned to a winning participant whose average price estimate guess is closest to the average price estimate among the participants. The average price estimate is calculated by an average module 28 associated with the award module 20.

As each participant guesses the average price estimate among the participants, this information is written to a table 30 within the memory 24. The memory 24 also contains information at 32 about the rules governing the conduct of the auction, in a form accessible to the various other modules. For example, the rules 32 allow the award module 20 to select a winning participant whose average price estimate guess is closes to the average price estimate among the participants. If two or more of the participants average price guesses are tied as closest to the average price estimate, the rules 32 will dictate how this conflict is to be resolved. For example, the award module 20 may cause a request to be passed to the appropriate participants, requiring a new average price guess to be provided by them. The award module 20 may then determine which participant has a new average price guess closest to the average price estimate among the participants. There may be restrictions on the new average price guesses, as discussed below. There may also be freedoms applying to new average price guesses such as fractional pricing in the event that fractional pricing is not permitted for an initial estimate.

The modem 26 provides communication from the computer 12 to participant devices 34. Communication may be direct with the participants 34 but is preferably by means of a network 36, as illustrated, which may be a global computer network such as the internet. Consequently, participant devices 34 may be appropriately programmed computers owned by the participants and communicating with the computer 12 by means of standard internet protocol. Alternatively, the participant devices 34 may be handheld devices or the like, used by participants who physically attend an auction venue. The handheld devices may communicate by means of a wireless network or other data network 36. Many other arrangements, conventional in themselves, could be provided for allowing participant devices to communicate with the computer 12 from local or remote locations, to allow participation.

Thus, the auction system described above can effect a quiz format auction or competitive auction using one of several venues and/or media forms. In one method, players can participate in the auction via the internet (exclusively or with the other methods as discussed below) using standard internet protocol with dedicated software.

Alternatively, participants may physically attend an auction venue using hand held devices or the like capable of registering at that location. A conventional balloting system may also be used instead of the hand held devices, although conventional balloting would require manual processing, which of course would result in unnecessary time consumption. The hand held devices will typically enable the participant to input some identification, possibly input the item for which the estimate is being supplied, and the estimate for processing by a processing system. The hand held device itself does not form part of the present invention, and details thereof will not be further described. Generally, however, the hand held device can be any suitable form of data entry and storage device with communication ability, either wired or wireless. Of course, those of ordinary skill in the art will contemplate many suitable alternatives, and the invention is not meant to be limited to any particular data entry device.

In a third mode of operation, the auction can be held at a physical auction site but with possible hand held device capability from remote locations, e.g., by closed circuit television, internet streaming video, etc.

Referring to the figures, in the competitive auction according to the present invention, in step S1, a participation fee is received from each of the plurality of participants. This transaction is effected by the fee module 16 which authorises a participant to take part in the auction only when the participation fee has been collected. In one embodiment (step S1-1), the method requires that the sum of the participation fees exceeds the cost of the item, preferably by an amount sufficient to provide a profit to the auction venue or sponsor. In this embodiment, if the sum of the participation fees does not exceed the cost of the item, the auction may be disqualified (step S1-2). If the participation fees are sufficient, the auction can proceed. Alternatively, a smaller participation fee can be received from the participants, and the winning participant can be required to pay for the item an amount that provides a profit for the auction organizer. The amount would necessarily be considerably discounted from the actual retail cost of the item so the winning participant still feels as though they have "won" the auction. The auction venue or sponsor may also adjust the participation fee higher or lower on a product by product basis and/or based on a number of participants.

Moreover, the participation fee may be provided via non-monetary contributions according to auction venue or sponsor preference. Such non-monetary items may include frequent flyer miles, casino promotional credit awards, credit card "use" dollars, entertainment, retail or services loyalty credit awards, corporate programs, internet participation and the like. For example, an airline or airline affiliate may accept frequent flyer miles as the participation fee. In a casino context, players may be awarded promotional credits or the like based on an amount of time played or money lost in the casino. In a similar context, the participation fee may be provided using accumulated non-denominated fractional payouts as described in co-pending European Patent Application Serial No. 02256690.5 filed September 25, 2002, the contents of which are herein incorporated by reference. Of course, still other monetary or non-monetary means may be suitable for the participation fee, and the invention is not necessarily meant to be limited to the described examples.

After receiving the participation fee from each of the participants, the participants provide a guess of an average price estimate for the auctioned item among the participants. That is, each participant has to estimate the average price that will be offered by all participants. This part of the process is conducted by means of the guess module 18, which receives guesses in turn from each authorised participant, and records the guesses in the table 30. As will be apparent, the average price estimated by all participants will not necessarily correspond with the actual cost of the item. In step S3, the average price estimates are processed by the average module 28 to determine the average price estimate among the participants. The award module 20 then consults the table 30 to identify the closest estimate, which wins the auction for that item.

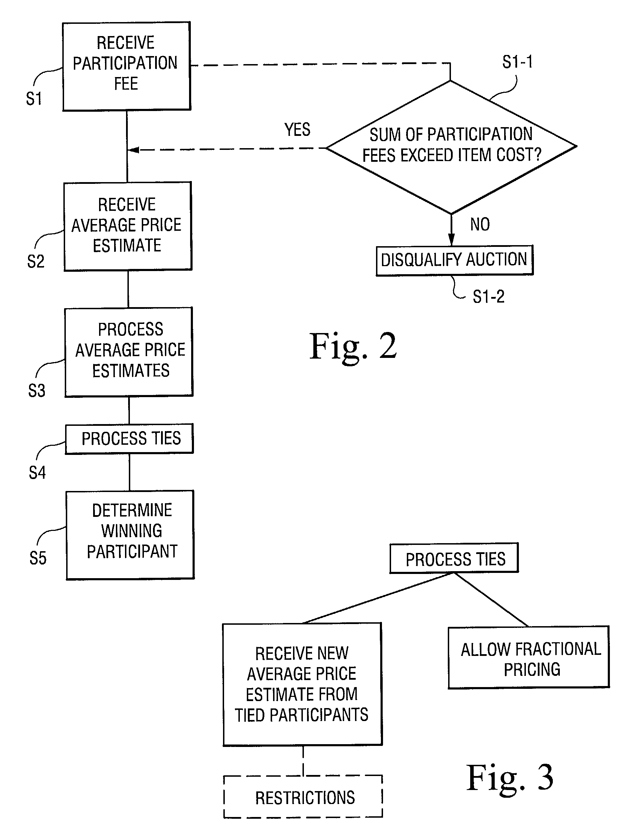

In the event of a tied estimate, ties can be processed in any of several ways (step S4). Referring to FIGURE 2, in step S4-1, the tied participants may simply be required by the guess module 18 to submit a new estimate. In this context, there may be complete freedom of choice with respect to the second estimate, or there may be restrictions (step S4-2), determined by the rules 32. For example, the tied participants may be required to submit an estimate that is different from their first round estimate. Alternatively, in step S4-3, fractional pricing may be permitted for estimates in a second round or a third round only. In this context, for example, if first round estimates are provided to a nearest dollar, second round estimates for resolving ties may include values less than $1 or even less than 1¢. Of course, fractional pricing may also be permitted in the first round average price estimates from the participants (step S2), which would significantly reduce the chance for a tied estimate.

After processing any ties, the winning participant is determined by the award module in step S5.

This methodology allows the sale of an item, such as a new car for example, by auction with all participants having an equal opportunity to use skill in estimating the correct average price as the average of price is estimated by all participants. Moreover, the methodology allows high turnover of premium price items without extensive ongoing marketing. The combined auction and game concepts according to the present invention will attract participants while enabling participants of all income levels to participate in auctions for high price items.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A system for conducting an auction for an item, the system comprising: fee means for receiving a participation fee from each of a plurality of participants; guess means for receiving from each of the participants a guess of an average price estimate for the item among the participants; and
award means for awarding the item to a winning participant whose average price guess is closest to the average price estimate among the participants.

2. A system according to claim 1, wherein the award means is operable, upon the occurrence of more than one winning participant when two or more of the participants' average price guesses are tied as closest to the average price estimate among the participants, to cause the guess means to receive new average price guesses from the tied participants, and the award means is operable to award the item to the winning participant whose new average price guess is closest to the average price estimate among the participants.

3. A system according to claim 2, wherein the system is operable to apply restrictions on the new average price guesses relative to the tied average price guesses.

4. A system according to claim 2 or 3, wherein upon the award means determining the occurrence of a tie after receiving the new average price guesses, the guess means is caused to receive second new average price guesses from the tied participants, and the award means is operable to award the item to the winning participant whose second new average price guess is closest to the average price estimate among the participants.

5. A system according to claim 2, 3, 4 wherein the guess means is operable to allow fractional pricing for the new average price guesses.

6. A system according to any preceding claim, wherein the guess means is operable to allow fractional pricing.

7. A system according to any preceding claim, wherein the auction is conducted over a global computer network.

8. A system according to any of claims 1 to 6, wherein the auction is conducted using hand-held bidding devices.

9. A system according to any preceding claim, wherein the fee means calculates a sum of the participation fees received from participants, and disables the guess means and/or the award means unless the said sum exceeds a cost of the item.

10. A system according to any preceding claim, wherein the fee means is operable to receive a non-monetary participation fee.

11. A system for conducting a competitive auction for an item with a plurality of participants, the system comprising guess means for receiving an average price estimate guess for the item among the participants from each of the participants, average means for determining the average price estimate among the participants, and award means for awarding the item to a winning participant whose average price estimate guess is closest to the average price estimate among the participants.

12. A system according to claim 11, further comprising fee means operable to receive a participation fee from each of the participants.

13. A system according to claim 12, wherein the fee means calculates a sum of the participation fees received from participants, and disables the guess means and/or the award means unless the said sum exceeds a cost of the item.

14. A system according to claim 12 or 13, wherein the fee means is operable to receive a non-monetary participation fee.

15. A method of conducting an auction for an item, the method comprising:
(a) receiving a participation fee from each of a plurality of participants;
(b) the participants each guessing an average price estimate for the item among the participants; and
(c) awarding the item to a winning participant whose average price guess is closest to the average price estimate among the participants.

16. A method according to claim 15, wherein upon the occurrence of more than one winning participant when two or more of the participants' average price guesses are tied as closest to the average price estimate among the participants, step (c) is practiced by receiving new average price guesses from the tied participants, and awarding the item to the winning participant whose new average price guess is closest to the average price estimate among the participants.

17. A method according to claim 16, wherein the step of receiving new average price guesses is practiced by putting restrictions on the new average price guesses relative to the tied average price guesses.

18. A method according to claims 16 or 17, wherein upon the occurrence of a tie after receiving the new average price guesses, step (c) is practiced by receiving second new average price guesses from the tied participants, and awarding the item to the winning participant whose second new average price guess is closest to the average price estimate among the participants.

19. A method according to claim 16, 17 or 18, wherein the step of receiving new average price guesses is practiced by allowing fractional pricing for the new average price guesses.

20. A method according to any of claims 15 to 19, wherein step (b) is practiced by allowing fractional pricing.

21. A method according to any of claims 15 to 20, wherein the auction is conducted over a global computer network.

22. A method according to any of claims 15 to 20, wherein the auction is conducted using hand-held bidding devices.

23. A method according to any of claims 15 to 22, further comprising requiring that a sum of the participation fees received I step (a) exceeds a cost of the item.

24. A method according to any of claims 15 to 23, wherein step (a) is practiced by receiving a non-monetary contribution according to auction venue or sponsor preference.

25. A method of conducting a competitive auction for an item with a plurality of participants, the method comprising receiving an average price estimate guess for the item among the participants from each of the participants, determining the average price estimate among the participants, and awarding the item to a winning participant whose average price estimate guess is closest to the average price estimate among the participants.

26. A method according to claim 25, further comprising receiving a participation fee from each of the participants.

27. A method according to claim 26, further comprising requiring that a sum of the participation fees exceeds a cost of the item.

28. A method according to claim 26 or 27, wherein the step of receiving a participation fee comprises receiving a non-monetary contribution according to auction venue or sponsor preference.
